# EUROPÄISCHE PATENTANMELDUNG

(11) **EP 4 152 551 A1**
(43) Veröffentlichungstag der Anmeldung: **22.03.2023**
(21) Anmeldenummer: 21197790.5
(22) Anmeldetag: 20.09.2021
(51) Int. Cl.: H02J 7/00

(54) **BATTERIELADEANLAGE**

(71) Anmelder: Fronius International GmbH, 4643 Pettenbach (AT)
(72) Erfinder: Binder, Jürgen, 4643 Pettenbach (AT); Holzleitner, Alexander, 4643 Pettenbach (AT); Klinglmayr, Clemens, 4643 Pettenbach (AT)
(74) Vertreter: Isarpatent

(57) **Zusammenfassung**

Batterieladeanlage (BLA) zum Laden eines austauschbaren Batteriesystems (BSYS), das zum Antrieb eines Elektromotors vorgesehen ist, wobei die Batterieladeanlage (BLA) für jede in dem austauschbaren Batteriesystem (BSYS) integrierte Traktionsbatterie (BAT) einen DC-Ladestecker (DC-LS) aufweist, der mit einem zugehörigen Batterieladegerät (BLG) einer Batterieladeeinheit (BLE) der Batterieladeanlage (BLA) verbunden ist, wobei die Batterieladeeinheiten (BLE) der Batterieladeanlage (BLA) über eine Kommunikationsverbindung (KV) der Batterieladeanlage (BLA) ihren jeweiligen Status zur Verriegelung von Betriebszustandsübergängen zwischen Betriebszuständen (BZ) der Batterieladeanlage (BLA) miteinander austauschen.

## Beschreibung

Die Erfindung betrifft eine Batterieladeanlage zum Aufladen eines austauschbaren Batteriesystems, das insbesondere zum Antrieb eines Elektromotors eines Fahrzeuges eingesetzt werden kann, sowie ein entsprechendes Verfahren zum Aufladen eines austauschbaren Batteriesystems.

Elektromotoren von Elektrofahrzeugen können durch ein Batteriesystem mit elektrischer Energie versorgt werden. Eine Traktionsbatterie stellt einen mobilen elektrischen Energiespeicher dar, der zum Antrieb von Elektrofahrzeugen dient. Traktionsbatterien werden auch als Antriebsbatterie, als Hochvoltspeicher oder als Zyklenbatterie bezeichnet. Traktionsbatterien werden vor allem für Schwerlastanwendungen von elektrisch angetriebenen Flurförderfahrzeugen verwendet. Derartige Flurförderfahrzeuge werden beispielsweise in Werk- oder Lagerhallen eingesetzt. Flurförderfahrzeuge, beispielsweise Gabelstapler, weisen in vielen Fällen zwei Blei-Traktionsbatterien mit hoher Nennspannung auf, die an dem Flurförderfahrzeug zur Energieversorgung von dessen Elektromotor parallel verschaltet betrieben werden. Die beiden Blei-Traktionsbatterien des austauschbaren Batteriesystems besitzen dabei jeweils einen eigenen DC-Ladestecker, mit denen die beiden Blei-Traktionsbatterien unabhängig voneinander mithilfe von Batterieladegeräten aufgeladen werden. Anschließend wird das austauschbare Batteriesystem mit den aufgeladenen Blei-Traktionsbatterien in das Elektroflurförderfahrzeug eingesetzt und dort parallel verschaltet betrieben.

Ein Nachteil einer derartigen herkömmlichen Batterieladeanlage besteht allerdings darin, dass es während der Aufladevorgänge der verschiedenen Traktionsbatterien zu einer größeren Abweichung des Ladezustandes (State of Charge SoC) der Traktionsbatterien kommen kann. Ursachen hierfür sind beispielsweise der Ausfall eines Batterieladegeräts oder eine fehlerhafte Gerätekonfiguration eines Batterieladegeräts der Batterieladeanlage oder beispielsweise ein Stromausfall in der Batterieladeanlage. Kommt es während des Ladevorganges zu einer größeren Abweichung des Ladezustandes zwischen den Traktionsbatterien und werden die dadurch unterschiedlich geladenen Traktionsbatterien des austauschbaren Batteriesystems nach Abschluss des Ladevorganges an das Elektrofahrzeug angeschlossen, kann es zu hohen elektrischen Ausgleichsströmen kommen. Diese Ausgleichsströme können sogar zu einem Auslösen eines Überstromschutzes in dem Elektrofahrzeug und somit zu einem Ausfall des Elektrofahrzeuges führen.

Es ist daher eine Aufgabe der vorliegenden Erfindung, eine Batterieladeanlage zum Laden eines austauschbaren Batteriesystems zu schaffen, welche das Auftreten von Ausgleichsströmen nach Anschluss des Batteriesystems zuverlässig verhindert.

Diese Aufgabe wird erfindungsgemäß durch eine Batterieladeanlage mit den in Patentanspruch 1 angegebenen Merkmalen gelöst.

Die Erfindung schafft demnach eine Batterieladeanlage zum Laden eines austauschbaren Batteriesystems, das zum Antrieb eines Elektromotors vorgesehen ist, wobei die Batterieladeanlage für jede in dem austauschbaren Batteriesystem integrierte Traktionsbatterie einen DC-Ladestecker aufweist, der mit einem zugehörigen Batterieladegerät einer Batterieladeeinheit der Batterieladeanlage verbunden ist,
wobei die Batterieladeeinheiten der Batterieladeanlage über eine Kommunikationsverbindung der Batterieladeanlage ihren jeweiligen Status zur Verriegelung von Betriebszustandsübergängen zwischen Betriebszuständen der Batterieladeanlage miteinander austauschen.

Die Batterieladeeinheiten der Batterieladeanlage übertragen über die Kommunikationsverbindung der Batterieladeanlage ihre jeweiligen momentanen Status zur Abstimmung der Aufladevorgänge der über die DC-Ladestecker an die Batterieladeanlage angeschlossenen Traktionsbatterien des austauschbaren Batteriesystems.

Bei der erfindungsgemäßen Batterieladeanlage erkennt jede Batterieladeeinheit der Batterieladeanlage auch den momentanen Status der übrigen Batterieladeeinheiten der Batterieladeanlage. Die durch die verschiedenen Batterieladeeinheiten bzw. Batterieladegeräte der Batterieladeanlage unabhängig voneinander durchgeführten Aufladevorgänge werden somit über die Kommunikationsverbindung der Batterieladeanlage verriegelt. Eine Abweichung der Ladezustände (State of Charge SoC) der verschiedenen Traktionsbatterien kann durch diese SoC-Verriegelung der Batterieladeeinheiten verhindert werden. Die Verriegelung der Betriebszustandsübergänge zwischen Betriebszuständen der Batterieladeanlage wird mittels einer zwischen den verschiedenen Batterieladeeinheiten bzw. Batterieladegeräten der Batterieladeanlage vorgesehenen Kommunikationsverbindung umgesetzt.

Bei einer möglichen Ausführungsform der erfindungsgemäßen Batterieladeanlage weist die Batterieladeanlage zu jedem Zeitpunkt einen von mehreren vorgegebenen Betriebszuständen auf. Diese Betriebszustände weisen bei einer möglichen Ausführungsform einen Leerlauf-Betriebszustand, einen Auflade-Betriebszustand, einen Ladeende-Betriebszustand, einen Ladeunterbrechungs-Betriebszustand und/oder einen oder mehrere Fehler-Betriebszustände auf.

Je nach Anwendungsfall können die Anzahl der verschiedenen vorgegebenen Betriebszustände der Batterieladeanlage variieren. Durch den gegenseitigen Austausch des momentanen Status der verschiedenen Batterieladeinheiten der Batterieladeanlage über die Kommunikationsverbindung der Batterieladeanlage können Übergänge zwischen verschiedenen Betriebszuständen der Batterieladeanlage verriegelt werden.

Bei einer möglichen Ausführungsform der erfindungsgemäßen Batterieladeanlage nimmt die Batterieladeanlage bei Unterbrechung der Kommunikationsverbindung zwischen den Batterieladeeinheiten der Batterieladeanlage jeweils einen Fehler-Betriebszustand ein ,wobei eine entsprechende Fehlermeldung erzeugt wird, welche die erfolgte Kommunikationsverbindungsunterbrechung angibt.

Bei einer möglichen Ausführungsform der erfindungsgemäßen Batterieladeanlage weisen die Batterieladeeinheiten der Batterieladeanlage jeweils einen AC-Ladestecker auf, der an ein Stromversorgungsnetz anschließbar ist.

Bei einer weiteren möglichen Ausführungsform der erfindungsgemäßen Batterieladeanlage weist die Kommunikationsverbindung zwischen den Batterieladeeinheiten der Batterieladeanlage eine drahtgebundene Kommunikationsverbindung auf. Bei dieser drahtgebundenen bzw. kabelgebundenen Kommunikationsverbindung kann es sich vorzugsweise um einen Datenbus handeln. Dieser Datenbus ist beispielsweise eine RS485-Schnittstelle oder ein Feldbus.

Bei einer alternativen Ausführungsform der erfindungsgemäßen Batterieladeanlage weist die Kommunikationsverbindung zwischen den Batterieladeeinheiten der Batterieladeanlage eine drahtlose Kommunikationsverbindung auf. Diese drahtlose Kom-munikationsverbindung wird beispielsweise durch eine Bluetooth-Verbindung gebildet.

Bei einer weiteren möglichen Ausführungsform der erfindungsgemäßen Batterieladeanlage übertragen die Batterieladeeinheiten der Batterieladeanlage über die Kommunikationsverbindung neben ihrem momentanen Status zusätzlich Konfigurationsdaten, welche eine Hardware- und/oder eine Softwarekonfiguration der jeweiligen Batterieladeeinheiten bzw. Batterieladegeräte angeben.

Bei einer möglichen Ausführungsform werden der jeweilige momentane Status der Batterieladeeinheiten und die Konfigurationsdaten der Batterieladeeinheiten über die gleiche Kommunikationsverbindung der Batterieladeanlage zwischen den Batterieladeeinheiten der Batterieladeanlage übertragen bzw. ausgetauscht. Bei einer alternativen Ausführungsform weist die Batterieladeanlage separate Kommunikationsverbindungen für die Übertragung der Statusangaben und für die Übertragung der Konfigurationsdaten der Batterieladeeinheiten der Batterieladeanlage auf.

Bei einer weiteren möglichen Ausführungsform der erfindungsgemäßen Batterieladeanlage vergleicht jede Batterieladeeinheit der Batterieladeanlage ihre eigene momentane Hardware- und/oder Softwarekonfiguration anhand der über die Kommunikationsverbindung empfangenen Konfigurationsdaten mit der Hardware- und/oder Softwarekonfiguration der übrigen Batterieladeeinheiten der Batterieladeanlage , wobei die Batterieladeanlage bei Bestehen einer signifikanten Konfigurationsabweichung einen entsprechenden Fehler-Betriebszustand einnimmt und eine entsprechende Fehlermeldung erzeugt.

Bei einer weiteren möglichen Ausführungsform der erfindungsgemäßen Batterieladeanlage überträgt jede Batterieladeeinheit der Batterieladeanlage ihren jeweiligen momentanen Status und/oder ihre Konfigurationsdaten bei Auftreten eines Ereignisses oder in regelmäßigen Zeitabständen über die Kommunikationsverbindung der Batterieladeanlage an die übrigen Batterieladeeinheiten der Batterieladeanlage.

Bei einer weiteren möglichen Ausführungsform der erfindungsgemäßen Batterieladeanlage weist jede Batterieladeeinheit der Batterieladeanlage eine Nutzerschnittstelle mit einer Eingabeeinheit zur Änderung des Status der zugehörigen Batterieladeeinheit und/oder zur Änderung eines Betriebszustandes der Batterieladeanlage und/oder mit einer Ausgabeeinheit zum Anzeigen des Status der zugehörigen Batterieladeeinheit und/oder zum Anzeigen des Betriebszustandes der Batterieladeanlage auf.

Bei einer weiteren möglichen Ausführungsform der erfindungsgemäßen Batterieladeanlage ist die Kommunikationsverbindung der Batterieladeanlage über ein Gateway der Batterieladeanlage mit dem Internet verbunden.

Bei einer weiteren möglichen Ausführungsform der erfindungsgemäßen Batterieladeanlage werden die über die Kommunikationsverbindung der Batterieladeanlage übertragenen Statusinformationen hinsichtlich des momentanen Status der Batterieladeeinheiten in einem lokalen Speicher der Batterieladeanlage oder in einer entfernten Datenbank gespeichert.

Bei einer weiteren möglichen Ausführungsform der erfindungsgemäßen Batterieladeanlage weist die Batterieladeeinheit der Batterieladeanlage jeweils eine Anschlusserkennungseinheit zur Erkennung eines elektrischen Anschlusses einer Traktionsbatterie an den zugehörigen DC-Ladestecker der Batterieladeeinheit auf.

Bei einer weiteren möglichen Ausführungsform der erfindungsgemäßen Batterieladeanlage weist die Batterieladeeinheit der Batterieladeanlage jeweils eine Leseeinheit zum Auslesen von Daten aus einem Datenspeicher einer über den zugehörigen DC-Ladestecker der Batterieladeeinheit angeschlossenen Traktionsbatterie auf.

Bei einer weiteren möglichen Ausführungsform der erfindungsgemäßen Batterieladeanlage weist die Batterieladeeinheit der Batterieladeanlage jeweils eine Schreibeinheit zum Einschreiben von Daten in einen Datenspeicher einer über den zugehörigen DC-Ladestecker der Batterieladeeinheit angeschlossenen Traktionsbatterie auf.

Die Erfindung schafft zudem ein Verfahren zum Laden von Traktionsbatterien eines austauschbaren Batteriesystems mit den in Patentanspruch 12 angegebenen Merkmalen.

Die Erfindung schafft demnach ein Verfahren zum Laden von Traktionsbatterien eines austauschbaren Batteriesystems, das zum Antrieb eines Elektromotors verwendet wird, wobei das Laden der in dem Batteriesystem integrierten Traktionsbatterien jeweils durch zugehörige Batterieladeeinheiten einer Batterieladeanlage separat erfolgt, wobei die Batterieladeeinheiten der Batterieladeanlage über eine Kommunikationsverbindung der Batterieladeanlage ihren jeweiligen Status zur Verriegelung von Betriebszustandsübergängen zwischen Betriebszuständen der Batterieladeanlage miteinander austauschen.

Im Weiteren werden mögliche Ausführungsformen der erfindungsgemäßen Batterieladeanlage und des erfindungsgemäßen Verfahrens zum Aufladen von Traktionsbatterien eines austauschbaren Batteriesystems unter Bezugnahme auf die beigefügten Figuren näher erläutert.

Es zeigen:
- Fig. 1: ein Blockschaltbild zur Darstellung eines Ausführungsbeispiels einer erfindungsgemäßen Batterieladeanlage zum Laden eines austauschbaren Batteriesystems;
- Fig. 2: ein mittels der erfindungsgemäßen Batterieladeanlage aufgeladenes Batteriesystem im eingebauten Zustand;
- Fig. 3: ein Zustandsdiagramm zur Darstellung eines Ausführungsbeispiels einer erfindungsgemäßen Batterieladeanlage;
- Fig. 4,5: Beispiele zur Erläuterung der Funktionsweise des erfindungsgemäßen Verfahrens und der erfindungsgemäßen Batterieladeanlage.

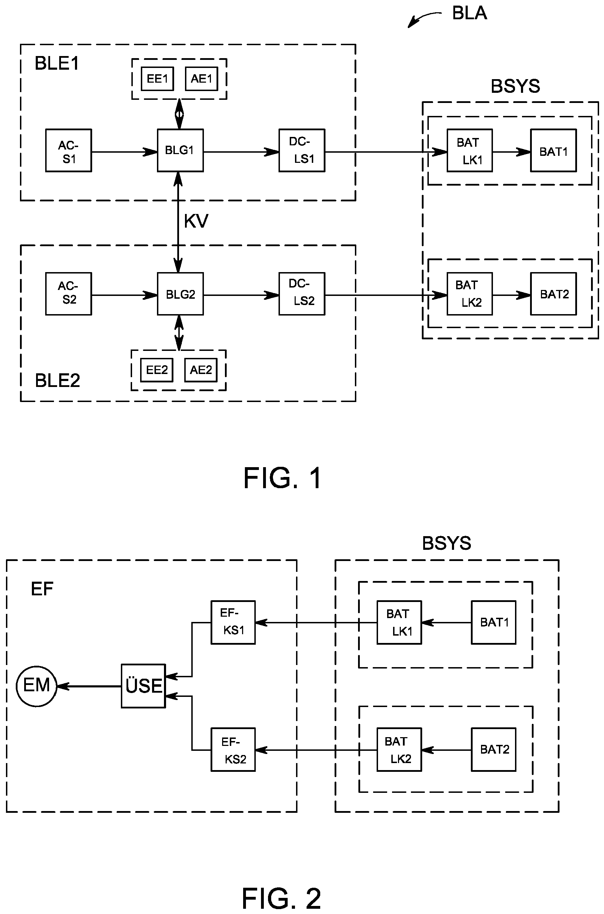

Fig. 1 zeigt ein Blockschaltbild zur Darstellung eines Ausführungsbeispiels einer erfindungsgemäßen Batterieladeanlage BLA. Bei dem in Fig. 1 dargestellten Ausführungsbeispiel umfasst die Batterieladeanlage BLA zwei Batterieladeeinheiten BLE. Die Batterieladeeinheiten BLEI, BLE2 der in Fig. 1 dargestellten Batterieladeanlage BLA enthalten jeweils ein Batterieladegerät BLG1, BLG2, das über einen AC-Stecker AC-S an ein Wechselstrom(AC)-Stromversorgungsnetz anschließbar sind. Darüber hinaus verfügt jede Batterieladeeinheit BLE über einen DC-Ladestecker DC-LS zum Anschluss einer Batterie, insbesondere einer Traktionsbatterie BAT, eines austauschbaren Batteriesystems BSYS. Jede Batterie BAT1, BAT2 des in Fig. 1 dargestellten austauschbaren Batteriesystems BSYS verfügt ihrerseits über einen Batterieladekupplung BAT-LK zum Anschluss an einen entsprechenden DC-Ladestecker DC-LS einer Batterieladeeinheit BLE. Da in dem in Fig.1 dargestellten Fall die Batterien BAT1,BAT2 geladen werden, fließt der Ladestrom in Stromrichtung entsprechend den in Fig. 1 dargestellten Pfeilen hin zu den Batterien BAT1,BAT2. Grundsätzlich ist diese Verbindung sowie die Verbindung zwischen BAT-LK und Batterie BAT jedoch bidirektional, da die Batterien BAT1,BAT2 im eingebauten Zustand des Batteriesystems BSYS gemäß Fig. 2 den Elektromotor EM des Elektrofahrzeugs EF mit Strom versorgen. Die Batterieladeeinheiten BLEI, BLE2 verfügen jeweils über eine Eingabeeinheit EE und eine Ausgabeeinheit AE. Wie in Figur 1 dargestellt hat die erste Batterieladeeinheit BLE1 eine Eingabeeinheit EE1 und eine Ausgabeeinheit AE1. Die zweite Batterieladeeinheit BLE2 hat eine Eingabeeinheit EE2 und eine Ausgabeeinheit AE2.

Bei den Batterien BAT1, BAT2 des austauschbaren Batteriesystems BSYS handelt es sich vorzugsweise um Traktionsbatterien bzw. Antriebsbatterien BAT für einen Elektromotor EM. Diese Traktionsbatterien BAT weisen bei einer möglichen Ausführungsform eine Nennspannung von 96 Volt oder 120 Volt auf. Die Ladekapazität kann beispielsweise zwischen 1000 und 1500 Amperestunden Ah liegen. Jede Batterie BAT1, BAT2 verfügt über eine zugehörige BatterieladekupplungBAT-LK und kann unabhängig von den übrigen Batterien des austauschbaren Batteriesystems BSYS über ihre eigene Batterieladekupplung BAT-LK aufgeladen werden. Bei einer möglichen Ausführungsform verfügt das austauschbare Batteriesystem BSYS über zwei Blei-Traktionsbatterien BAT1, BAT2 mit einer hohen Nennspannung von 96 Volt oder 120 Volt. Die Blei-Traktionsbatterien weisen ein relativ hohes Gewicht auf. Das hohe Gewicht der BleiAkkumulatoren bzw. Blei-Traktionsbatterien kann beispielsweise bei Gabelstaplern als Gegengewicht an der Hinterachse dienen. Grundsätzlich ist jedoch das erfindungsgemäße Verfahren unabhängig vom Typ der Batterie BAT. Wie bereits beschrieben ist das erfindungsgemäße Verfahren auch für mehr als zwei Batterien BAT geeignet.

Die Blei-Traktionsbatterien BAT des austauschbaren Batteriesystems BSYS können seriell verschaltbare Batteriezellen aufweisen. Beispielsweise können 40 einzelne Batteriezellen mit einer Nennspannung von jeweils 2 Volt seriell zur Bildung einer Batterie mit einer Nennspannung von 80 Volt verschaltet sein. Die Anzahl der seriell verschalteten Batteriezellen kann je nach Anwendungsfall variieren. Die Blei-Traktionsbatterien können kurzzeitig hohe Stromstärken abgeben, d.h., sie besitzen eine hohe Leistungsdichte. Diese Eigenschaft ist z.B. für Elektrofahrzeuge EF mit Chargerbatterien notwendig. Andererseits führen Kurzschlüsse aufgrund dieser Eigenschaft zu hohen Stromstärken.

Fig. 2 zeigt ein austauschbares Batteriesystem BSYS mit zwei Batterien BAT1, BAT2 in eingebautem Zustand, d.h. nach Anschluss an ein Elektrofahrzeug EF. Das Elektrofahrzeug EF enthält einen Elektromotor EM, welcher über eine Überstromschutzeinrichtung ÜSE an zwei parallel verschaltete Elektrofahrzeug-Kabelstecker EF-KS des Elektrofahrzeugs EF angeschlossen ist. Die Parallelschaltung der Batterien BAT1,BAT2 erfolgt wie in Fig.2 dargestellt durch die Überstromschutzeinrichtung ÜSE. Das Elektrofahrzeug EF verfügt somit in dem dargestellten Ausführungsbeispiel über zwei Kabelstecker EF-KS1, EF-KS2 zum Anschluss an die zugehörigen Batterieladekupplungen BAT-LK1, BAT-LK2 des austauschbaren Batteriesystems BSYS. Nach Anschluss des austauschbaren Batteriesystems BSYS an das Elektrofahrzeug EF wird der Elektromotor EM durch die beiden Batterien BAT1, BAT2 des austauschbaren Batteriesystems BSYS mit Strom versorgt. Die in Fig.1 dargestellte erfindungsgemäße Batterieladeanlage BLA sorgt dabei aufgrund des Austausches der Statusinformation über seine Kommunikationsverbindung KV dafür, dass nach Abkopplung des Batteriesystems BSYS von der Batterieladeanlage BLA und anschließendem Einbau des Batteriesystems BSYS in das Elektrofahrzeug EF keine zu hohen elektrischen Ausgleichsströme zwischen den Batterien BAT1, BAT2 des austauschbaren Batteriesystems BSYS auftreten, welche beispielsweise zum Auslösen des Überstromschutzes ÜSE innerhalb des Elektrofahrzeuges EF führen können. Bei dem Elektrofahrzeug EF kann es sich beispielsweise um ein Flurförderfahrzeug, insbesondere einen Gabelstapler, handeln.

Die in Fig. 1 dargestellte Batterieladeanlage BLA weist für jede in dem austauschbaren Batteriesystem BSYS integrierte Traktionsbatterie BAT1, BAT2 einen DC-Ladestecker DC-LS auf, der mit einem zugehörigen Batterieladegerät BLG der Batterieladeeinheit BLE verbunden ist. Die beiden Batterieladegeräte BLG1, BLG2 der beiden Batterieladeeinheiten BLE sind über eine Kommunikationsverbindung KV miteinander verbunden. Die beiden Batterieladegeräte BLG1, BLG2 der Batterieladeanlage BLA tauschen über die Kommunikationsverbindung KV ihre jeweiligen momentanen Status zur Verriegelung von Betriebszustandsübergängen zwischen Betriebszuständen BZ der Batterieladeanlage BLA und zur Abstimmung der Aufladevorgänge der über die DC-Ladestecker DC-LS an die Batterieladeanlage BLA angeschlossenen Traktionsbatterien BAT1, BAT2 des austauschbaren Batteriesystems BSYS aus. Über die in Fig. 1 dargestellte Kommunikationsverbindung KV werden die beiden Batterieladegeräte BLG1, BLG2 der Batterieladeeinheiten BLEI, BLE2 der Batterieladeanlage BLA miteinander hinsichtlich der Aufladevorgänge und des Ladezustandes SoC der Batterien BAT verriegelt.

Bei einer möglichen Ausführungsform wird die Verriegelung mittels eines kabelgebundenen Bussystems umgesetzt bzw. implementiert. Bei einer alternativen Ausführungsform kann die Kommunikationsverbindung KV zwischen den beiden Batterieladegeräten BLG1, BLG2 auch eine drahtlose Kommunikationsverbindung KV aufweisen. Bei dieser drahtlosen Kommunikationsverbindung KV handelt es sich beispielsweise um eine Bluetooth-Kommunikationsverbindung zwischen den beiden Batterieladegeräten BLG1, BLG2. Eine drahtgebundene Kommunikationsverbindung KV kann beispielsweise über eine RS485-Schnittstelle oder über einen Feldbus, beispielsweise den CAN-Feldbus, hergestellt werden.

Bei Unterbrechung der Kommunikationsverbindung KV zwischen den beiden Batterieladegeräten BLG1, BLG2 der Batterieladeeinheiten BLEI, BLE2 nehmen die Batterieladeeinheiten BLE bei einer möglichen Ausführungsform einen entsprechenden Fehler-Status ein und erzeugen automatisch eine entsprechende Fehlermeldung, welche die erfolgte ungewollte Kommunikationsverbindungsunterbrechung angibt bzw. anzeigt.

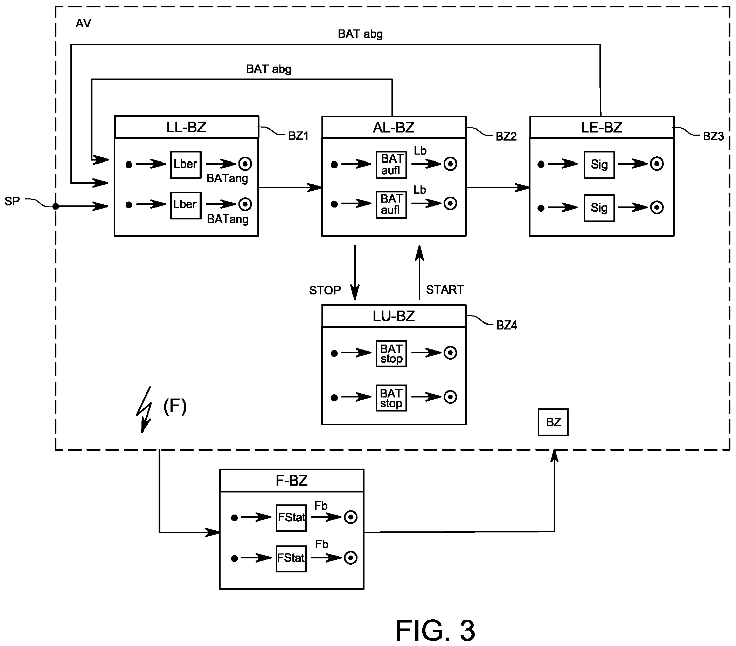

Bei einer möglichen Ausführungsform nimmt die Batterieladeanlage BLA zu jedem Zeitpunkt jeweils einen von mehreren vorgegebenen normalen Betriebszuständen BZ, beispielsweise einen der Betriebszustände BZ1,BZ2,BZ,3,BZ4, oder eine Fehler-Betriebszustand F-BZ ein, wie in dem Zustandsdiagramm in Fig.3 schematisch dargestellt.

In dem Zustandsdiagramm gemäß Fig.3 stellen die Pfeile zwischen den verschiedenen Betriebszuständen BZ jeweils Betriebszustandsübergänge bzw. Betriebszustandswechsel von einem Betriebszustand der Batterieladeanlage BLA in einen anderen Betriebszustand der Batterieladeanlage BLA dar.

Das Zustandsdiagramm gemäß Fig.3 zeigt das gesamte Aufladeverfahren AV. Das Aufladeverfahren AV umfasst in den verschiedenen Betriebszuständen BZ der Batterieladeanlage BLA unterschiedliche Aufladevorgänge, die jeweils durch Batterieladegeräte BLG der Batterieladeeinheiten BLE zeitlich voneinander unabhängig ausgeführt werden können.

Bei einer möglichen Ausführungsform umfassen die Betriebszustände BZ der Batterieladeanlage BLA einen Leerlauf(LL)-Betriebszustand (BZ1), einen Auflade(AL)-Betriebszustand (BZ2), einen Ladeende(LE)-Betriebszustand (BZ3), einen Ladeunterbrechungs(LU)-Betriebszustand (BZ4) und/oder einen oder mehrere Fehler(F)-Betriebszustände (F-BZ), wie auch in dem Zustandsdiagramm eines Aufladeverfahrens AV in Fig. 3 schematisch dargestellt. Sofern die Hardwarevoraussetzung gegeben ist, d.h. speziell die Kommunikationsverbindung KV zwischen den Contollern der Batterieladegeräten BLG betriebsbereit ist, kann das Aufladeverfahren AV durchgeführt bzw. gestartet werden. Die Kommunikation über die Kommunikationsverbindung KV erfolgt, sobald die Batterieladegeräte BLG der Batterieladeinheiten BLE der Batterieladeanlage BLA aktiv sind.

Die Verriegelung der Betriebszustandsübergänge zwischen Betriebszuständen BZ der Batterieladeanlage BLA durch die Kom-munikationsverbindung KV ist in Fig. 3 anhand der Punkt-Symbole bzw. Punkt-Kreis-Symbole dargestellt. Das Punkt-Symbol stellt entsprechend einen Startpunkt dar, das Punkt-Kreis-Symbol einen Endpunkt. Es weisen vorzugsweise beide Batterieladegeräte BLG1, BLG2 der beiden Batterieladeeinheiten BLEI, BLE2 der Batterieladeanlage BLA denselben Status auf, bevor der Betriebszustand BZ der Batterieladeanlage BLA gewechselt bzw. umgeschaltet wird. Beispielsweise müssen beide Batterieladeeinheiten BLE1, BLE2 für einen Zustandswechsel bzw. einen Betriebszustandsübergang im Leerlauf-Betriebszustand LL-BZ der Batterieladeanlage BLA den Status "Batterie angesteckt"(BATang), im Auflade-Betriebszustand AL-BZ der Batterieladeanlage BLA den Status "Laden beendet" (Lb)oder im Fehler-Betriebszustand F-BZ der Batterieladeanlage BLA den Status "Fehler behoben" (Fb) aufweisen, damit ein Betriebszustandsübergang in einen anderen Betriebszustand BZ der Batterieladeanlage BLA erfolgen kann.

Das Aufladeverfahrens AV wird gemäß dem Startpunkt SP gestartet, also sobald beispielsweise eine Hauptstromversorgung eingeschaltet wird.

In dem Leerlauf-Betriebszustand LL-BZ der Batterieladeanlage BLA sind die Batterieladegeräte BLG1,BLG2 die Batterieladeeinheiten BLEI, BLE2 der Batterieladeanlage BLA jeweils zur Durchführung eines Aufladevorganges innerhalb des Aufladeverfahrens AV bereit und warten jeweils im Status "ladebereit" (Lber)auf den Anschluss einer aufzuladenden Batterie BAT an den entsprechenden DC-Ladestecker DC-LS der zugehörigen Batterieladeeinheit BLE1,BLE2.

Wird die erste Batterie BAT1 des Batteriesystems BSYS an den DC-Ladestecker DC-LS1 der ersten Batterieladeinheit BLE1 der Batterieladeanlage BLA angeschlossen meldet die erste Batterieladeeinheit BLE1 den neuen Status "Batterie angesteckt"(BATang) über die Kommunikationsverbindung KV an die zweite Batterieladeeinheit BLE2 der Batterieladeanlage BLA. Sobald die zweite Batterie BAT2 des Batteriesystems BSYS an den DC-Ladestecker DC-LS2 der zweiten Batterieladeinheit BLE2 der Batterieladeanlage BLA angeschlossen wird, meldet die zweite Batterieladeeinheit BLE2 ebenfalls den neuen Status "Batterie angesteckt"(BATang) über die Kommunikationsverbindung KV an die erste Batterieladeeinheit BLE2 der Batterieladeanlage BLA. Erst wenn beide Batterieladeinheiten BLE1, BLE2 der Batterieladeanlage BLA den Status "Batterie angesteckt " (BATang) melden, erfolgt ein Betriebszustandsübergang der Batterieladeanlage BLA von dem Leerlauf-Betriebszustand LL-BZ in den Aufladebetriebszustand AL-BZ, wie in Fig.3 dargestellt. Die Reihenfolge kann auch umgekehrt sein, d.h. zunächst kann die zweite Batterieladeinheit BLE2 den Status "Batterie angesteckt"(BATang) anzeigen bzw. melden und anschließend erfolgt der Betriebszustandsübergang der Batterieladeanlage BLA in den Aufladebetriebszustand AL-BZ sobald auch die erste Batterieladeinheit BLE1 den gleichen Status "Batterie angesteckt" (BATang) über die Kommunikationsverbindung KV meldet.

Während des Auflade-Betriebszustandes AL-BZ der Batterieladeanlage BLA werden die entsprechenden Batterien BAT1,BAT2 des austauschbaren Batteriesystems BSYS durch die Batterieladegeräte BLG1,BLG2 der Batterieladeeinheiten BLE1,BLE2 über die DC-Ladestecker DC-LS1,DC-LS2 der Batterieladeeinheiten BLE1,BLE2 und die Batterieladekupplungen BAT-LK1, BAT-LK2 der Batterien BAT1,BAT2 in zwei unabhängigen Aufladevorgängen aufgeladen. Die hierfür benötigte Energie bzw. der hierfür benötigte Strom erhält die Batterieladeeinheit BLE jeweils über ihren AC-Anschluss-Stecker AC-S von einem Stromversorgungsnetz. Die Batterieladeinheiten BLE können in dem Aufladebetriebszustand AL-BZ der Batterieladeanlage BLA während des jeweiligen Aufladevorganges jeweils den Status "Batterie wird aufgeladen"(BATaufl)über die Kommunikationsverbindung KV melden.

Sobald der durch das Batterieladegerät BLG einer Batterieladeinheit BLE vorgenommene Aufladevorgang an einer Batterie BAT abgeschlossen ist, nimmt die entsprechende Batterieladeeinheit BLE einen Status "Laden beendet" (Lb) ein und meldet dies über die Kommunikationsverbindung KV. Sobald beide Batterieladeinheiten BLE1,BLE2 den Status "Laden beendet"(Lb) über die Kommunikationsverbindung KV gemeldet haben, erfolgt automatisch ein Zustandswechsel bzw. ein Umschalten der Batterieladeanlage BLA von dem bisherigen Aufladebetriebszustand AL-BZ in den Ladeende-Betriebszustand LE-BZ in einem Betriebszustandsübergang, wie in Fig. 3 schematisch dargestellt. In dem Ladeende-Betriebszustand LE-BZ der Batterieladeanlage BLA wird dem Nutzer mittels der Ausgabeeinheiten AE signalisiert (Status "signalisieren" Sig) , dass die Aufladevorgänge an den beiden Batterien BAT1,BAT2 des Batteriesystems BSYS abgeschlossen sind und das austauschbare Batteriesystem BSYS mit den darin enthaltenen Batterien BAT1,BAT2 nunmehr gefahrlos in das Elektrofahrzeug EF eingebaut werden kann.

Wird zumindest eine Batterie BAT während des Auflade-Betriebszustandes AL-BZ oder während des Ladeende-Betriebszustandes LL-BZ von dem Batterieladegerät BLG der zugehörigen Batterieladeeinheit BLE abgesteckt, wird von der betroffenen Batterieladeinheit BLE der Status "Batterie abgesteckt" (BATabg) über die Kommunikationsverbindung KV gemeldet und die Batterieladeanlage BLA wechselt wieder in den Leerlauf-Betriebszustand LL-BZ bzw. wird in diesen umgeschaltet, wie in Fig.3 schematisch dargestellt.

Der durch ein Batterieladegerät BLG einer Batterieladeeinheit BLE der Batterieladeanlage BLA vorgenommene Aufladevorgang kann bei einer möglichen Ausführungsform über eine Nutzerschnittstelle beispielsweise mithilfe eines Eingabeelementes EE seitens eines Nutzers unterbrochen werden. Bei einer möglichen Ausführungsform verfügt jede Batterieladeeinheit BLE zusätzlich über eine Nutzerschnittstelle.

Die Nutzerschnittstelle umfasst vorzugsweise eine Eingabeeinheit EE zur Änderung eines momentanen Status der Batterieladeeinheit BLE und eine Ausgabeeinheit AE zur Anzeige des momentanen Status der Batterieladeeinheit BLE. Die Eingabeeinheit EE der Nutzerschnittstelle der Batterieladeeinheit BLE wird beispielsweise durch einen Druckknopf gebildet, mit dessen Hilfe ein Nutzer einen Aufladevorgang zum Aufladen einer Batterie BAT durch ein Batterieladegerät BLG einer Batterieladeeinheit BLE unterbrechen kann. Wird beispielsweise ein Ladestoppdruckknopf durch den Nutzer gedrückt (Stop), ändert sich der momentane Status der entsprechenden Batterieladeeinheit BLE von dem Status "Batterie wird aufladen" (BATaufl) in den Status "Batterieladestop" (BATstop). Wird an der Nutzerschnittstelle der Batterieladeeinheit BLE anschließend durch den Nutzer beispielsweise ein Ladestartknopf gedrückt (Start), nimmt die die entsprechende Batterieladeeinheit BLE wieder den Status "Batterie wird aufgeladen"( BATaufl) ein.. Die Batterieladeeinheiten BLE können bei Auftreten eines Fehlers F innerhalb der Batterieladeinheit BLE einen entsprechenden Fehler-Status F-Stat einnehmen. Der Fehler F kann entsprechend unvorhergesehen zu einem beliebigen Zeitpunkt während des Aufladeverfahrens AV auftreten. Der aktuelle Status einer Batterieladeinheit BLE und/oder der Betriebszustand BZ der gesamten Batterieladeanlage BLA wird vorzugsweise gespeichert - in Fig. 3 symbolisiert durch ein Quadrat, sodass bei Auftreten des Fehlers F dieser Status oder Betriebszustand BZ bekannt ist. Es kann dann in den Fehler-Betriebszustand F-BZ der Batterieladeanlage BLA gewechselt bzw. umgeschaltet werden. Wird beispielsweise die Kommunikationsverbindung KV zwischen den Batterieladeladegeräten BLG1, BLG2 der Batterieladeeinheiten BLE1, BLE2 unterbrochen, nehmen die betroffenen Batterieladeeinheiten BLE1, BLE2 der Batterieladeanlage BLA jeweils einen entsprechenden Fehlerstatus Fstat und die Batterieladeanlage BLA einen Fehler-Betriebszustand F-BZ ein. Es wird vorzugsweise zusätzlich eine Fehlermeldung erzeugt, welche die erfolgte Kommunikationsverbindungsunterbrechung anzeigt. Diese Fehlermeldung kann beispielsweise über die Ausgabeeinheiten AE der Nutzerschnittstellen der Batterieladeeinheiten BLE einem Nutzer der Batterieladeanlage BLA angezeigt werden. Sobald der Fehler beseitigt ist bzw. die Kommunikationsverbindung KV wieder hergestellt ist, kann bei einer möglichen Ausführungsform die entsprechende Batterieladeeinheit BLE aus dem Fehlerstatus in den gespeicherten Status vor Auftreten des Fehlers zurückkehren. Sobald der Fehler behoben ist, nehmen die Batterieladeeinheiten BLE wieder den vor dem Auftreten des Fehlers gespeicherten Status ein und es erfolgt eine Wechsel bzw. Umschalten bzw. ein Betriebszustandsübergang der Batterieladeanlage BLA aus dem Fehler-Betriebszustand F-BZ in den zuvor gespeicherten Betriebszustand BZ.

Bei einer möglichen Ausführungsform der erfindungsgemäßen Batterieladeanlage BLA ist diese über ein Gateway mit einem Datennetzwerk, beispielsweise dem Internet, verbunden. Die über die Kommunikationsverbindung KV der Batterieladeanlage BLA ausgetauschten momentanen Statusinformationen der verschiedenen Batterieladeeinheiten BLE und die zeitlich nacheinander eingenommenen Betriebszustände BZ der Batterieladeanlage BLA können bei einer möglichen Ausführungsform in einem lokalen Speicher der Batterieladeanlage BLA mit einem Zeitstempel versehen zwischengespeichert werden. Bei einer weiteren möglichen Ausführungsform können die zwischen den Batterieladeeinheiten BLE über die Kommunikationsverbindung KV ausgetauschten Statusinformationen bzw. Statusdaten und die Betriebszustände BZ der Batterieladeanlage BLA auch in einem entfernten Datenspeicher oder einer Datenbank zur weiteren Auswertung gespeichert werden. Beispielsweise können die gespeicherten Daten hinsichtlich einer Fehleranalyse eines aufgetretenen Betriebsfehlers ausgewertet werden. Wie man aus dem Zustandsdiagramm gemäß Fig. 3 erkennen kann, sind die verschiedenen Batterieladeeinheiten BLE der Batterieladeanlage BLA hinsichtlich der Aufladevorgänge der Traktionsbatterien BAT miteinander verriegelt. Die Verriegelung erfolgt entsprechend über die Kommunikationsverbindung KV, indem die Betriebszustandsübergänge zwischen den verschiedenen Betriebszuständen BZ der Batterieladeanlage BLA verriegelt bzw. synchronisiert werden. Die Betriebszustände BZ und Betriebszustandsübergänge werden vorzugsweise durch Ausgabeeinheiten AE der Batterieladeeinheiten BLE angezeigt. Die physikalischen Aufladevorgänge der Batterien BAT durch die Batterieladegeräte BLG der Batterieladeinheiten BLE können grundsätzlich auch unabhängig voneinander erfolgen und demnach auch zu unterschiedlichen Zeitpunkten beendet sein. Die Ausgabeeinheit AE zeigt aber gemäß der Verriegelung erst an, dass das Aufladeverfahren AV des gesamten Batteriesystem BSYS beendet ist, wenn alle Aufladevorgänge an den in dem Batteriesystem BSYS enthaltenen Batterien BAT unabhängig voneinander abgeschlossen worden sind. Es wird somit auf diese Weise verhindert, dass die verschiedenen Batterien BAT des austauschbaren Batteriesystems BSYS unterschiedliche Ladezustände SoC einnehmen und es nach Anschluss des austauschbaren Batteriesystems BSYS an das Elektrofahrzeug EF zu ungewollten hohen elektrischen Ausgleichsströmen kommen kann.

Bei einer weiteren möglichen Ausführungsform der erfindungsgemäßen Batterieladeanlage BLA können die Batterieladeeinheiten BLE der Batterieladeanlage BLA über die Kommunikationsverbindung KV neben ihren momentanen Status auch Konfigurationsdaten KDAT übertragen, welche eine Hardware- und/oder Softwarekonfiguration der jeweiligen Batterieladeeinheiten BLE angeben. Jede Batterieladeeinheit BLE kann ihre eigene Hardware- und/oder Softwarekonfiguration anhand der über die Kommunikationsverbindung KV empfangenen Konfigurationsdaten KDAT mit der momentanen Hardware- und/oder Softwarekonfiguration der übrigen Batterieladeeinheiten BLE der Batterieladeanlage BLA vergleichen. Bei Bestehen einer signifikanten Konfigurationsabweichung kann die Batterieladeanlage BLA einen entsprechenden Fehler-Betriebszustand F-BZ einnehmen und zusätzlich eine entsprechende Fehlermeldung generieren. Diese Fehlermeldung wird beispielsweise über eine Anzeigeeinheit AE der Nutzerschnittstelle der Batterieladeeinheit BLE einem Nutzer der Batterieladeanlage BLA angezeigt. Bei einer möglichen Ausführungsform kann jede Batterieladeeinheit BLE der Batterieladeanlage BLA ihren jeweiligen momentanen Status und/oder ihre Konfigurationsdaten KDAT bei Auftreten eines Ereignisses über die interne Kommunikationsverbindung KV der Batterieladeanlage BLA an die übrigen Batterieladeeinheiten BLE der Batterieladeanlage BLA übertragen. Das Ereignis kann beispielsweise im Erkennen eines Fehler-Status einer anderen Batterieladeeinheit BLE der Batterieladeanlage BLA bestehen. Bei einer alternativen Ausführungsform werden die Konfigurationsdaten KDAT und die momentanen Statusinformationen jeder Batterieladeeinheit BLE in regelmäßigen Zeitabständen über die Kommunikationsverbindung KV der Batterieladeanlage BLA an die übrigen Batterieladeeinheiten BLE der Batterieladeanlage BLA übertragen. Beispielsweise erfolgt ein Austausch der Konfigurationsdaten KDAT sowie der Statusinformationen der Batterieladeeinheiten BLE jede Sekunde oder jede Minute oder in Echtzeit bzw. kontinuierlich.

Bei einer möglichen Ausführungsform der erfindungsgemäßen Batterieladeanlage BLA verfügt jedes Batterieladegerät BLG der Batterieladeeinheit BLE über einen integrierten Controller, der über die interne Kommunikationsverbindung KV, beispielsweise einen Datenbus, mit den Controllern der übrigen Batterieladegeräte BLG der Batterieladeanlage BLA verbunden ist. Die Kommunikationsverbindung KV kann beispielsweise einen seriellen oder parallelen Datenbus umfassen. Über diesen Datenbus werden einerseits der jeweilige momentane Status der entsprechenden Batterieladeeinheiten BLE übertragen und andererseits bei Bedarf zusätzlich Konfigurationsdaten KDAT hinsichtlich der Konfiguration der betreffenden Batterieladeeinheit BLE. Bei einer weiteren möglichen Ausführungsform ist die Kommunikationsverbindung KV der Batterieladeanlage BLA mit einem Gateway der Batterieladeanlage BLA verbunden. Dieses Gateway bildet bei einer möglichen Ausführungsform einen Zugangspunkt zu einem Datennetzwerk, beispielsweise dem Internet. Bei einer möglichen Ausführungsform werden die Statusinformationen hinsichtlich des momentanen Status der verschiedenen Batterieladeeinheiten BLE der Batterieladeanlage BLA über das Gateway an einen entfernten Server übertragen.

Andere Ausführungsformen der erfindungsgemäßen Batterieladeanlage BLA sind möglich. Bei einer möglichen Ausführungsform verfügt jede Batterieladeeinheit BLE der Batterieladeanlage BLA neben dem DC-Ladestecker DC-LS zusätzlich über eine Anschlusserkennungseinheit, welche den Anschluss einer Traktionsbatterie BAT an den DC-Ladestecker DC-LS der Batterieladeeinheit BLE erkennt und über die Kommunikationsverbindung KV der Batterieladeanlage BLA an den Controller des entsprechenden Batterieladegerätes BLG sowie an die Controller der übrigen Batterieladegeräte BLG meldet.

Bei einer weiteren möglichen Ausführungsform weist die Batterieladeeinheit BLE der Batterieladeanlage BLA zusätzlich jeweils eine Leseeinheit auf. Diese Leseeinheit kann zum Auslesen von Daten aus einem lokalen Datenspeicher einer über den zugehörigen DC-Ladestecker DC-LS der Batterieladeeinheit BLE angeschlossenen Traktionsbatterie BAT vorgesehen sein. Diese Daten geben beispielweise einen Typ oder Betriebsparameter der angeschlossenen Traktionsbatterie BAT an und können bei Durchführung des Aufladevorganges durch den Controller des Batterieladegerätes BLG der Batterieladeeinheit BLE berücksichtigt werden.

Bei einer weiteren möglichen Ausführungsform weist die Batterieladeeinheit BLE der Batterieladeanlage BLA jeweils zusätzlich eine Schreibeinheit zum Einschreiben von Daten in einen lokalen Datenspeicher einer über den zugehörigen DC-Ladestecker DC-LS der Batterieladeeinheit BLE angeschlossenen Traktionsbatterie BAT auf. Beispielsweise kann der Controller des Batterieladegerätes BLG der Batterieladeeinheit BLE über die Schreibeinheit Daten hinsichtlich des erfolgten Aufladevorganges in einen lokalen Datenspeicher der Traktionsbatterie BAT des austauschbaren Batteriesystems BSYS einschreiben. Beispielsweise kann in den lokalen Datenspeicher der Traktionsbatterie BAT seitens des Controllers des Batterieladegerätes BLG eingeschrieben werden, an welcher Batterieladeanlage BLA die Traktionsbatterie BAT des austauschbaren Batteriesystems BSYS aufgeladen wurde.

Bei einer möglichen Ausführungsform ist die Leseeinheit und die Schreibeinheit der Batterieladeeinheit BLE in den DC-Ladestecker DC-LS der Batterieladeeinheit BLE integriert. Ein Auslesen von Daten aus einem lokalen Datenspeicher der Traktionsbatterie BAT sowie ein Einschreiben von Daten in den lokalen Datenspeicher der Traktionsbatterie BAT erfolgt bei einer möglichen Ausführungsform drahtlos, beispielsweise mittels NFC-Verbindung.

Die Aufladeverriegelung der Aufladevorgänge innerhalb des Aufladeverfahrens AV mithilfe der Kommunikationsverbindung KV kann bei einer möglichen Ausführungsform über eine Nutzerschnittstelle der Batterieladeanlage BLA aktiviert bzw. deaktiviert werden. Bei einer möglichen Ausführungsform ist eine Deaktivierung der Ladeverriegelungsfunktion nur durch eine hierzu berechtigte Person bzw. einem hierzu berechtigten Nutzer möglich. Bei einer möglichen Ausführungsform der erfindungsgemäßen Batterieladeanlage BLA wird ein Nutzer der Batterieladeanlage BLA über die Nutzerschnittstelle der Batterieladeanlage BLA authentifiziert. Ein entsprechend authentifizierter und autorisierter Nutzer kann bei einer möglichen Ausführungsform die Ladeverriegelungsfunktion an der Batterieladeanlage BLA aktivieren bzw. deaktivieren.

Bei Ausführung des Aufladeverfahrens AV an Batterien BAT eines austauschbaren Batteriesystems BSYS befinden sich die beiden Batterieladeeinheiten BLE bzw. die darin befindlichen Batterieladegeräte BLG zunächst in dem Leerlauf-Betriebszustand LL-BZ der Batterieladeanlage BLA und nehmen den Status "ladebereit" (Lber) ein, wobei sie auf den Anschluss einer entsprechenden Batterie BAT über den DC-Ladestecker DC-LS der betreffenden Batterieladeeinheit BLE warten. Wenn beide DC-Ladestecker DC-LS1, DC-LS2 an eine entsprechende Batterie BAT1,BAT2 angeschlossen sind, nehmen beide Batterieladeeinheiten BLE den Status "Batterie angesteckt" (BATang) ein. Dies triggert einen automatischen Wechsel bzw. Betriebszustandsübergang aus dem Leerlaufbetriebszustand LL-BZ der Batterieladeanlage BLA in den Auflade-Betriebszustand AL-BZ, um die entsprechenden Traktionsbatterien BAT in zwei separaten Aufladevorgängen des Aufladeverfahrens AV durch entsprechende Batterieladeeinheiten BLE1,BLE2 aufzuladen. Eine Batterieladeeinheit BLE wartet also stets bzw. bevorzugt auf die andere Batterieladeeinheit BLE und der Ladevorgang zum Laden der Batterien BAT1,BAT2 des Batteriesystems BSYS erfolgt entsprechend verriegelt. Der Ladevorgang zum Laden des Batteriesystems BSYS umfasst getrennte Aufladevorgänge zum jeweiligen Aufladen der in dem Batteriesystem BSYS enthaltenen Batterien BAT1,BAT2, wobei die Aufladevorgänge der Batterien BAT1,BAT2 durch den in Fig.3 schematisch dargestellten Verriegelungsmechanismus verschränkt bzw. verriegelt ausgeführt werden. Die Aufladevorgänge an den Batterien BAT1,BAT2 des Batteriesystems BSYS können daher auch zeitlich unabhängig voneinander bzw. zeitlich versetzt ausgeführt werden. Die Verriegelung erfolgt mittels der über die Kommunikationsschnittstelle bzw. Kommunikationsverbindung KV übertragenen Daten, insbesondere anhand der Statusinformation, welche den momentanen Status der Batterieladeinheiten BLE angeben. Wird der Aufladevvorgang an einer der beiden Batterieladeeinheiten BLE beispielsweise über eine Nutzerschnittstelle durch einen Nutzer durch Drücken eines entsprechenden Bedienknopfes unterbrochen, ändert die entsprechende Batterieladeeinheit BLE ihren Status.

Nach Beendigung des jeweiligen Aufladevorganges, beispielsweise nach Durchführung eines entsprechenden Ladeprogramms durch die Batterieladegeräte BLG, nehmen die Batterieladeeinheiten BLE den Status "Laden beendet" (Lb) ein und die Batterieladeanlage BLA geht von dem Auflade-Betriebszustand AL-BZ in den Ladeende-Betriebszustand LE-BZ über, wie in Fig. 3 schematisch dargestellt. Über die Kommunikationsverbindung KV kann dabei noch ausgetauscht werden, ob bereits beide Ausgabeeinheiten AE1,AE2 der Batterieladeeinheiten BLE1,BLE2 das Ladeende anzeigen dürfen.

Auf diese Weise kann sichergestellt werden, dass beide Batterien BAT des austauschbaren Batteriesystems BSYS nach Beendigung des Ladevorganges den gleichen Ladezustand SoC aufweisen und nach Anschluss an das Elektrofahrzeug EF keine nennenswerten bzw. gefährlichen Ausgleichsströme auftreten.

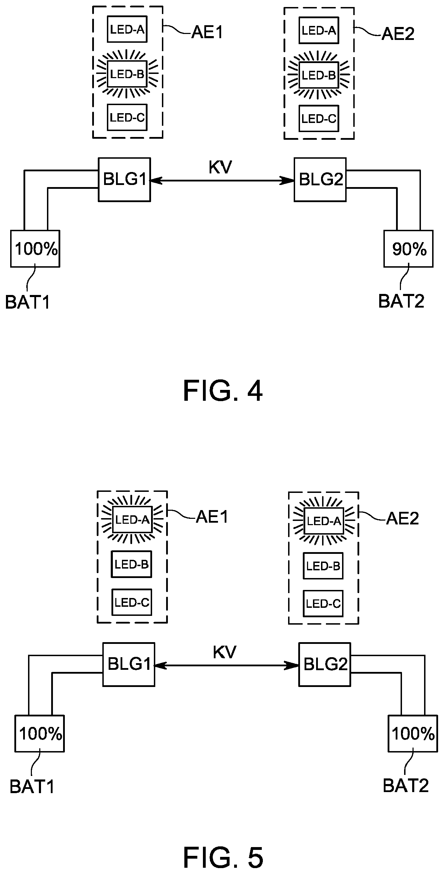

Die Aufladeverriegelung der Aufladevorgänge des Aufladeverfahrens AV zum Aufladen von Batterien BAT1,BAT2 eines Batteriesystems BSYS ist in den Fig. 4 und 5 beispielhaft für den Fall dargestellt, dass die separaten bzw. unabhängigen Aufladevorgänge zum Aufladen der beiden Batterien BAT1,BAT2 des Batteriesystems BSYS während des Ladens des Batteriesystems BSYS nicht gleichzeitig beendet werden .

Fig. 4 zeigt die Situation, dass die erste Batterie BAT 1 bereits vollständig geladen ist(SoC1=100%) - Status "Laden beendet" (Lb), wohingegen die zweite Batterie BAT 2 noch nicht vollständig geladen ist (SoC2=90%) - Status "Batterie laden"(BATaufl). Die Übertragung der Statusinformationen über die Kommunikationsverbindung KV resultiert darin, dass die jeweilige Ausgabeeinheiten AE1,AE2 der Batterieladeeinheiten BLE1,BLE2 anzeigen, dass noch nicht alle Aufladevorgänge, die durch die verschiedenen Batterieladegeräte BLG1,BLG2 der Batterieladeinheiten BLE1,BLE2 der Batterieladeanlage BLA zum Aufladen aller Batterien BAT1,BAT2 des Batteriesystems BSYS vorgenommen werden, abgeschlossen sind. Beispielsweise leuchtet jeweils eine orange LED-B in der Mitte von drei Anzeigeelementen LED-A, LED-B, LED-C der beiden Ausgabeeinheiten AE1,AE2,der Batterieladeeinheiten BLE1,BLE2, welche den momentanen Status "Batterie Laden" (BATaufl)der entsprechenden Batterieladeinheit BLE anzeigt. Es kann auch der Auflade-Betriebszustand AL-BZ der gesamten Batterieladeanlage BLA optisch angezeigt werden. Somit kommt der Nutzer nicht in Versuchung, die beiden Batterien BAT1, BAT2 des Batteriesystems BSY mit unterschiedlichen Ladezuständen SoCl,SoC2 in das Elektrofahrzeug EF einzubauen, wodurch möglicherweise zu hohe Ausgleichsströme verursacht werden.

Fig. 5 zeigt die Situation, dass zu einem späteren Zeitpunkt beide Batterien BAT1, BAT2 des Batteriesystems BSYS vollständig geladen sind(SoC1=100%; SoC2=100%). Die Übertragung der Statusinformationen über die Kommunikationsverbindung KV resultiert darin, dass die beiden Ausgabeeinheiten AE1,AE2 der Batterieladeeinheiten BLE1,BLE2 der Batterieladeanlage BLA dem Nutzer anzeigen, dass die Aufladevorgänge an beiden Batterien BAT1,BAT2 abgeschlossen sind. Beispielsweise leuchtet jeweils eine grüne LED-A der drei Anzeigeelemente LED-A,LED-B,LED-C der beiden Ausgabeeinheiten AE1,AE2, welche den Status "Laden beendet" (Lb) anzeigt. Daraufhin kann der Nutzer das Batteriesystem BSYS mit den beiden darin enthaltenen - vollständig aufgeladenen - Batterien BAT1,BAT2 in das Elektrofahrzeug EF einbauen. Aufgrund der vollständigen Aufladung der beiden Batterien BAT1, BAT2 und somit gleichen Ladezustände (SoC1=SoC2=100%) kommt es nach Einbau des Batteriesystems BSYS zu keinen für den Nutzer oder eine sonstige Person gefährlichen Ausgleichsströmen. Das dritte Anzeigeelement LED-C der beiden Anzeigeeinheiten AE1,AE2 ist für den Status "Fehler" vorgesehen und leuchtet demnach bei Auftreten eines Fehlers bevorzugt rot.

Die verschiedenen Statusinformationen hinsichtlich eines momentanen bzw. aktuellen Status einer Batterieladeeinheit BLE können beispielsweise mithilfe von LEDs über eine Nutzerschnittstelle der betreffenden Batterieladeeinheit BLE einem Nutzer der Batterieladeanlage BLA angezeigt werden. Beispielsweise wird die Beendigung des entsprechenden Aufladevorganges durch eine grünleuchtende LED dem Nutzer angezeigt. Sobald in dem Aufladeverfahren AV der gesamte Ladevorgang des austauschbaren Batterieladesystems BSYS, welcher die unabhängigen Aufladevorgänge der darin enthaltenen Batterien BAT umfasst, abgeschlossen ist, kann das Batteriesystem BSYS von den Ladesteckern DC-LS der Batterieladeanlage BLA entfernt werden und bei Bedarf an entsprechende Kabelstecker EF-KS des Elektrofahrzeuges EF angeschlossen werden.

Die erfindungsgemäße Batterieladeanlage BLA verfügt über mehrere Batterieladeeinheiten BLE, die ihrerseits jeweils ein Batterieladegerät BLG, einen AC-Stecker AC-S und einen DC-Ladestecker DC-LS umfassen. Für jedes Batterieladegerät BLG der Batterieladeeinheit BLE ist vorzugsweise ein Controller vorgesehen, welcher über eine Kommunikationsverbindung KV mit den Controllern der übrigen Batterieladegeräte BLG der Batterieladeanlage BLA verbunden ist. Bei einer möglichen Ausführungsform der erfindungsgemäßen Batterieladeanlage BLA können verschiedenartige Fehler-status mit zugehörigen Fehlermeldungen auftreten. Beispielsweise besteht ein erster Fehler-status eine Batterieladeeinheit BLE darin, dass die betreffende Batterieladeeinheit BLE keine Kommunikationsverbindung KV zu einer anderen Batterieladeeinheit BLE der Batterieladeanlage BLA aufweist. Ein Fehler-Betriebszustand der Batterieladeanlage BLA kann darin bestehen, dass zwar eine Kommunikationsverbindung KV zwischen den verschiedenen Batterieladeeinheiten BLE besteht, jedoch eine der Batterieladeeinheiten BLE ihrerseits einen Fehler-Status anzeigt. Ein weiterer Fehler-Betriebszustand kann beispielsweise darin bestehen, dass die Hardware- und/oder Softwarekonfiguration der Batterieladegeräte BLG1, BLG2 der Batterieladeeinheiten BLEI, BLE2 unterschiedlich ist oder die verschiedenen Batterieladegeräte BLG1, BLG2 der Batterieladeeinheiten BLE1,BLE2 ein unterschiedliches Lade- oder Kommunikationsprotokoll verwenden. Sind beispielsweise die Batterieladegeräte BLG1, BLG2 inkompatibel, kann dies als Fehler-Betriebszustand der Batterieladeanlage BLA angezeigt werden.

Verfügt die Batterieladeeinheit BLE über eine entsprechende Leseeinheit zum Auslesen von Konfigurationsdaten KDAT aus einem lokalen Datenspeicher einer Traktionsbatterie BAT innerhalb des austauschbaren Batteriesystems BSYS, kann zudem die Kompatibilität der verschiedenen Traktionsbatterien BAT innerhalb des austauschbaren Batteriesystems BSYS zueinander oder gegenüber den vorgesehenen Batterieladegeräten BLG1, BLG2 der Batterieladeeinheiten BLE überprüft werden. Sind beispielsweise die Batterieladegeräte BLG1, BLG2 nicht kompatibel mit den Traktionsbatterien BAT1, BAT2 des austauschbaren Batteriesystems BSYS, kann dies als eigenständiger Fehler-Betriebszustand der Batterieladeanlage BLA angezeigt werden. Beispielsweise wird dem Nutzer der Batterieladeanlage BLA angezeigt, dass die Traktionsbatterien BAT1, BAT2 des aufzuladenden Batteriesystems BSYS nicht kompatibel zu den Batterieladegeräten BLG1, BLG2 der Batterieladeanlage BLA sind. Weiterhin kann bei einer möglichen Ausführungsform über eine Nutzerschnittstelle der Batterieladeanlage BLA auch angezeigt werden, dass die verschiedenen Traktionsbatterien BAT1, BAT2 des angeschlossenen austauschbaren Batteriesystems BSYS zueinander inkompatibel sind, sodass es nach Aufladen durch die Batterieladeanlage BLA zu Ausgleichsströmen kommen kann.

Bei einer möglichen Ausführungsform des austauschbaren Batteriesystems BSYS sind die verschiedenen Traktionsbatterien BAT1, BAT2 innerhalb des Batteriesystems BSYS fest integriert. Bei einer alternativen Ausführungsform können die Traktionsbatterien BAT innerhalb des austauschbaren Batteriesystems BSYS ihrerseits ausgewechselt werden, insbesondere wenn eine Traktionsbatterie BAT defekt ist. Falls es beim Austausch einer defekten Traktionsbatterie BAT zu einer Verwechslung kommt, kann dies bei einer möglichen Ausführungsform durch die erfindungsgemäße Batterieladeanlage BLA durch Auswertung von über die Kommunikationsverbindung KV ausgetauschten Daten erkannt werden und ein Aufladen der zueinander inkompatiblen Traktionsbatterien BAT verhindert werden.

### Bezugzeichenliste:

- AC-S: AC Stecker
- AE: Ausgabeeinheit
- AV: Aufladeverfahren
- BZ: Betriebszustand
- BAT: Batterie
- BAT-LK: Batterieladekupplung
- BLA: Batterieladanlage
- BLG: Batterieladegerät
- BSYS: Batteriesystem
- DC-LS: DC Ladestecker
- EE: Eingabeeinheit
- EF: Elektrofahrzeug
- EF-KS: Elektrofahrzeug-Kabelstecker
- EM: Elektromotor
- F: Fehler
- F-BZ: Fehler-Betriebszustand
- KV: Kommunikationsverbindung
- LL-BZ: Leerlauf-Betriebszustand
- AL-BZ: Auflade-Betriebszustand
- LE-BZ: Ladeende-Betriebszustand
- LU-BZ: Ladeunterbrechung-Betriebszustand
- ÜSE: Überstromsicherung

## Patentansprüche

1. Batterieladeanlage (BLA) zum Laden eines austauschbaren Batteriesystems (BSYS), das zum Antrieb eines Elektromotors vorgesehen ist, wobei die Batterieladeanlage (BLA) für jede in dem austauschbaren Batteriesystem (BSYS) integrierte Traktionsbatterie (BAT) einen DC-Ladestecker (DC-LS) aufweist, der mit einem zugehörigen Batterieladegerät (BLG) einer Batterieladeeinheit (BLE) der Batterieladeanlage (BLA) verbunden ist,
wobei die Batterieladeeinheiten (BLE) der Batterieladeanlage (BLA) über eine Kommunikationsverbindung (KV) der Batterieladeanlage (BLA) ihren jeweiligen Status zur Verriegelung von Betriebszustandsübergängen zwischen Betriebszuständen (BZ) der Batterieladeanlage (BLA) miteinander austauschen.

2. Batterieladeanlage nach Anspruch 1,
wobei die Batterieladeanlage (BLA) einen von mehreren vorgegebenen Betriebszuständen (BZ) einnimmt, welche aufweisen:
einen Leerlauf-Betriebszustand (LL-BZ),
einen Auflade-Betriebszustand (AL-BZ),
einen Ladeende-Betriebszustand (LE-BZ),
einen Ladeunterbrechungs-Betriebszustand (LU-BZ) und/oder
einen oder mehrere Fehler-Betriebszustände (F-BZ).

3. Batterieladeanlage nach Anspruch 1 oder 2,
wobei die Batterieladeanlage(BLA) bei Unterbrechung der Kommunikationsverbindung (KV) zwischen den Batterieladeeinheiten (BLE) der Batterieladeanlage (BLA) jeweils einen Fehler-Betriebszustand (F-BZ) einnimmt und eine entsprechende Fehlermeldung erzeugt, welche die erfolgte Kommunikationsverbindungsunterbrechung angibt.

4. Batterieladeanlage nach einem der vorangehenden Ansprüche 1 bis 3,
wobei die Kommunikationsverbindung (KV) zwischen den Batterieladeeinheiten (BLE) der Batterieladeanlage (BLA) eine drahtgebundene Kommunikationsverbindung, insbesondere einen Datenbus, oder eine drahtlose Kommunikationsverbindung aufweist.

5. Batterieladeanlage nach einem der vorangehenden Ansprüche 1 bis 4,
wobei die Batterieladeeinheiten (BLE) der Batterieladeanlage (BLA) über die Kommunikationsverbindung (KV) Konfigurationsdaten (KDAT) übertragen, welche eine Hardware- und/oder eine Softwarekonfiguration der jeweiligen Batterieladeeinheiten (BLE) angeben.

6. Batterieladeanlage nach Anspruch 5,
wobei jede Batterieladeeinheit (BLE) der Batterieladeanlage (BLA) ihre eigene Hardware- und/oder Softwarekonfiguration anhand der über die Kommunikationsverbindung (KV) empfangenen Konfigurationsdaten (KDAT) mit der Hardware- und/oder Softwarekonfiguration der mindestens einen übrigen Batterieladeeinheit (BLE) der Batterieladeanlage (BLA) vergleicht und die Batterieladeanlage (BLA) bei Bestehen einer signifikanten Konfigurationsabweichung einen entsprechenden Fehler-Betriebszustand einnimmt und eine entsprechende Fehlermeldung erzeugt.

7. Batterieladeanlage nach Anspruch 5 oder 6,
wobei jede Batterieladeeinheit (BLE) der Batterieladeanlage (BLA) ihren jeweiligen momentanen Status und/oder ihre Konfigurationsdaten (KDAT) bei Auftreten eines Ereignisses oder in regelmäßigen Zeitabständen über die Kommunikationsverbindung (KV) der Batterieladeanlage (BLA) an die übrigen Batterieladeeinheiten (BLE) der Batterieladeanlage (BLA) überträgt.

8. Batterieladeanlage nach einem der vorangehenden Ansprüche 1 bis 7,
wobei jede Batterieladeeinheit (BLE) der Batterieladeanlage (BLA) eine Nutzerschnittstelle mit einer Eingabeeinheit (EE) zur Änderung eines Status der Batterieladeeinheit (BLE) und/oder zur Änderung eines Betriebszustandes (BZ)der Batterieladeanlage (BLA) und/oder eine Ausgabeeinheit (AE) zur Anzeige des Status der Batterieladeeinheit (BLE) und/oder zur Anzeige des Betriebszustandes der Batterieladeanlage (BLA) aufweist.

9. Batterieladeanlage nach einem der vorangehenden Ansprüche 1 bis 8,
wobei die Kommunikationsverbindung (KV) der Batterieladeanlage (BLA) über ein Gateway der Batterieladeanlage (BLA) mit dem Internet verbunden ist.

10. Batterieladeanlage nach einem der vorangehenden Ansprüche 1 bis 9,
wobei die über die Kommunikationsverbindung (KV) der Batterieladeanlage (BLA) übertragene Status der Batterieladeeinheiten (BLE) in einem lokalen Speicher der Batterieladeanlage (BLA) oder einer entfernten Datenbank gespeichert werden.

11. Batterieladeanlage nach einem der vorangehenden Ansprüche 1 bis 10,
wobei die Batterieladeeinheiten (BLE) der Batterieladeanlage (BLA) jeweils eine Anschlusserkennungseinheit zur Erkennung eines elektrischen Anschlusses einer Traktionsbatterie (BAT) an den zugehörigen DC-Ladestecker (DC-LS) der Batterieladeeinheit (BLE) aufweist.

12. Verfahren zum Aufladen von Traktionsbatterien (BAT) eines austauschbaren Batteriesystems (BSYS), das zum Antrieb eines Elektromotors (EM) verwendet wird, wobei das Laden der in dem austauschbaren Batteriesystem (BSYS) integrierten Traktionsbatterien (BAT) jeweils durch zugehörige Batterieladeeinheiten (BLE) einer Batterieladeanlage (BLA) separat erfolgt, wobei die Batterieladeeinheiten (BLE) der Batterieladeanlage (BLA) über eine Kommunikationsverbindung (KV) der Batterieladeanlage (BLA) ihren jeweiligen Status zur Verriegelung von Betriebszustandsübergängen zwischen Betriebszuständen (BZ) der Batterieladeanlage (BLA) miteinander austauschen.

13. Verfahren nach Anspruch 12,
wobei die Batterieladeanlage (BLA) einen von mehreren vorgegebenen Betriebszuständen (BZ) einnimmt, welche aufweisen:
einen Leerlauf-Betriebszustand (LL-BZ),
einen Auflade-Betriebszustand (AL-BZ),
einen Ladeende-Betriebszustand (LE-BZ),
einen Ladeunterbrechungs-Betriebszustand (LU-BZ) und/oder
einen oder mehrere Fehler-Betriebszustände (F-BZ).

14. Verfahren nach Anspruch 12 oder 13,
wobei die Batterieladeeinheiten (BLE) der Batterieladeanlage (BLA) jeweils eine Nutzerschnittstelle mit einer Eingabeeinheit (EE) zur Änderung eines Status der Batterieladeeinheit (BLE) und/oder zur Änderung eines Betriebszustandes (BZ)der Batterieladeanlage (BLA) und/oder mit einer Ausgabeeinheit (AE) aufweist, die den Status der Batterieladeeinheit (BLE) und/oder den Betriebszustand der Batterieladeanlage (BLA) anzeigt.

15. Verfahren nach einem der vorangehenden Ansprüche 12 bis 14, wobei die Batterieladeanlage(BLA) bei Unterbrechung der Kommunikationsverbindung (KV) zwischen den Batterieladeeinheiten (BLE) der Batterieladeanlage (BLA) jeweils einen Fehler-Betriebszustand (F-BZ) einnimmt und eine entsprechende Fehlermeldung erzeugt, welche die erfolgte Kommunikationsverbindungsunterbrechung angibt.
